# EUROPÄISCHE PATENTANMELDUNG

(11) **EP 1 504 837 A1**
(43) Veröffentlichungstag der Anmeldung: **09.02.2005**
(21) Anmeldenummer: 04016780.1
(22) Anmeldetag: 16.07.2004
(51) Int. Cl.: B23C 3/12, B28D 1/32, B23Q 1/54

(54) **Verfahren und Vorrichtung zur Bearbeitung der Aussenkontur eines Werkstücks**

(30) Priorität: 06.08.2003 DE 10336455
(71) Anmelder: Schiefergruben Magog GmbH & Co. KG, 57392 Schmallenberg (DE)
(72) Erfinder: Schürmann, Erich, Prof. Dr.-Ing., 48324 Sendenhorst (DE)
(74) Vertreter: Patentanwälte Ostriga, Sonnet, Wirths & Roche

(57) **Zusammenfassung**

Die Erfindung betrifft eine Vorrichtung und ein Verfahren zur Bearbeitung der Außenkontur von Werkstücken.

Aufgabe der Erfindung ist es, eine Vorrichtung und ein Verfahren zu schaffen, mit dem bereits bestehende Bearbeitungsprogramme zur Steuerung von Maschinen mit rechtwinklig zur Bearbeitungsebene (E) angeordneter Rotationsachse (x) auch bei Maschinen verwendet werden können, deren Rotationsachse parallel zur Bearbeitungsebene angeordnet ist.

Die Aufgabe wurde gelöst, in dem wenigstens das Werkzeug (15) um eine Schwenkachse (4) drehbar ist, welche im wesentlichen im Mittelpunkt (M) des in Bearbeitungsposition befindlichen, radiusförmigen Arbeitsbereichs des Werkzeugs senkrecht zur Bearbeitungsebene angeordnet ist.

## Beschreibung

Zunächst betrifft die Anmeldung ein Verfahren zur Bearbeitung einer Außenkontur eines Werkstücks, bei dem das Werkstück mittels einer Transporteinrichtung einem rotierenden Werkzeug zugeführt und / oder ein bewegbares Werkzeug dem Werkstück zugeführt wird, wobei das Werkzeug mit einem radiusförmigen, einen Radiusmittelpunkt aufweisenden Arbeitsbereich versehen ist und wobei die Transporteinrichtung und / oder das bewegbare Werkzeug programmgesteuert werden.

Ein solches Verfahren ist aus dem druckschriftlich nicht belegbaren Stand der Technik bekannt. Beispielsweise bei Fräsmaschinen ist das Werkstück fest eingespannt und der senkrecht zur Werkstückebene angeordnete Fräser wird entsprechend der gewünschten Kontur an das Werkstück herangeführt. Des Weiteren sind Maschinen bekannt, bei denen das Werkzeug fest angeordnet ist und das Werkstück an das Werkzeug heranbewegt wird.

Für Maschinensteuerungen derartiger Vorrichtungen aus dem Stand der Technik gibt es Programme, welche die einzelnen Bewegungen des Werkzeugs oder Werkstücks steuern und dabei den Durchmesser des Werkzeugs berücksichtigen. Solche Programme sind allerdings nur für Vorrichtungen, die das Werkstück tangential zur Werkstückaußenkontur bearbeiten erhältlich.

In besonderen Fällen ist eine tangentiale Bearbeitung ungünstig oder gar unmöglich, wie beispielsweise bei der Bearbeitung mineralischer Platten. Bei diesem Anwendungsfall würde eine tangentiale Bearbeitung mit einer senkrecht zur Plattenebene angeordneten Rotationsachse des Werkzeugs nicht das gewünschte Bearbeitungsbild ergeben. Darüber hinaus kann eine nicht tangentiale Bearbeitung aus wirtschaftlichen Gründen sinnvoll sein, beispielsweise um höhere Zerspanungsleistungen zu erreichen.

Um dies zu ermöglichen wird beispielsweise die Rotationsachse des Werkzeugs nicht mehr senkrecht zur Bewegungsebene des Werkstücks, sondern parallel dazu angeordnet. Das Werkzeug weist dabei eine bestimmte Bearbeitungsrichtung auf, so dass die herkömmlichen Bearbeitungsprogramme für Werkzeuge mit einer allseitig tangentialen Bearbeitung nicht verwendbar sind. Für derartige Werkzeuge mit lediglich einer bestimmten Wirkrichtung liegen jedoch noch keine Bearbeitungsprogramme vor, so dass diese erst in aufwändiger Weise erstellt werden müssten.

Aufgabe der Erfindung ist es deshalb ein Verfahren zur Bearbeitung der Außenkontur eines Werkstücks zu schaffen, mit dem auch bereits bestehende Bearbeitungsprogramme für Maschinensteuerungen verwendet werden können.

Die Aufgabe wird gelöst, indem das Werkzeug in Abhängigkeit von der Bewegungsrichtung des Werkstücks um eine Schwenkachse gedreht wird, die bei einem in Bearbeitungsposition befindlichen, radiusförmigen Arbeitsbereich in dessen Mittelpunkt senkrecht zur Bearbeitungsebene angeordnet ist

Der Vorteil des erfindungsgemäßen Verfahrens besteht darin, dass aufgrund der Schwenkbarkeit des Bearbeitungswerkzeugs um den Radiusmittelpunkt des Arbeitsbereichs die Bearbeitungsrichtung des Werkzeugs optimal auf das Werkstück ausgerichtet werden kann. Es können somit auch beim Einsatz nicht allseitig oder tangential wirkender Werkzeuge herkömmliche Bearbeitungsprogramme verwendet werden, die beispielsweise zur Steuerung von Fräsmaschinen vorgesehen sind.

In einer ersten Ausführungsform ist eine im rechten Winkel zu einer Rotationsachse des Werkzeugs angeordnete, die Schwenkachse schneidende Werkzeugmittelachse während der Bearbeitung des Werkstücks ständig in etwa auf den Mittelpunkt des Werkstücks ausgerichtet. Wird das Werkstück beispielsweise im Werkstückmittelpunkt gehalten und angetrieben, so muss das Werkzeug lediglich auf die Ortskoordinaten der Halte- und Antriebseinrichtung ausgerichtet werden. Aber auch wenn das Werkstück nicht im Mittelpunkt gehalten ist, muss lediglich der konstante Abstand vom Haltepunkt zum Werkstückmittelpunkt im Steuerungsprogramm berücksichtigt werden. Bei geradem und kurvenförmigen Vorschub ist das Werkzeug trotz einfacher Programmierung somit immer auf das Werkstück ausgerichtet.

Eine weitere Ausführungsform sieht vor, dass eine im rechten Winkel zu einer Rotationsachse des Werkzeugs angeordnete, die Schwenkachse schneidende Werkzeugmittelachse während der Bearbeitung des Werkstücks einen definierten Winkel zur jeweiligen Vorschubrichtung bildet. In diesem Fall bleiben die Bearbeitungsparameter während der Bearbeitung bis zum Wechsel der Vorschubrichtung konstant. Das Werkzeug kann somit in einem optimalen Winkel zur Bearbeitung des Werkstücks eingestellt werden. Es ergibt sich beispielsweise bei der Außenkontur einer mineralischen Materialplatte ein gewünschtes Bearbeitungsbild.

Zur vereinfachten Berechnung kann gemäß einer weiteren Ausführungsform der Nullpunkt eines Koordinatensystems der Programmsteuerung im Schnittpunkt der Schwenkachse und der Bearbeitungsebene angeordnet sein.

Des Weiteren betrifft die Erfindung eine Vorrichtung zur Bearbeitung von Außenkonturen von Werkstücken mit wenigstens einem rotierenden, einen radiusförmigen Arbeitsbereich aufweisenden Werkzeug, mit einer Antriebseinrichtung zur translatorischen und / oder rotatorischen Bewegung eines Werkstücks und / oder des Werkzeugs und mit einer Programmsteuerung.

Für eine solche Vorrichtung ergibt sich derselbe Stand der Technik wie bei den zuvor genannten Verfahren. Ausgehend von diesem Stand der Technik ist es auch hier Aufgabe der Erfindung eine Vorrichtung zur Bearbeitung von Außenkonturen von Werkstücken zu schaffen, bei der herkömmliche Bearbeitungsprogramme zur Steuerung der Vorrichtung einsetzbar sind.

Die Aufgabe wird gelöst, in dem wenigstens das Werkzeug um eine Schwenkachse drehbar ist, die im wesentlichen im Mittelpunkt des in Bearbeitungsposition befindlichen, radiusförmigen Arbeitsbereichs des Werkzeugs senkrecht zur Bearbeitungsebene angeordnet ist.

Der Vorteil der erfindungsgemäßen Vorrichtung besteht darin, dass durch die Anordnung der Schwenkachse des Werkzeugs im Mittelpunkt des radiusförmigen Arbeitsbereichs die Verwendung herkömmlicher Steuerungsprogramme möglich ist, da die Wirkrichtung des Werkzeugs variiert werden kann.

In einer ersten Ausführungsform ist das Werkzeug als ein mehrere radiale Fortsätze aufweisendes Zurichtwerkzeug, insbesondere zum Bearbeiten von mineralischen Platten ausgebildet. Ebenso lässt sich beispielsweise aber auch ein Werkzeug in Form eines Kugelfräskopfes verwenden.

Für den Fall, dass das Bearbeitungswerkzeug fest angeordnet ist und das Werkstück beweglich ist, kann das Werkstück gemäß einer weiteren Ausführungsform im Wesentlichen im Werkstückmittelpunkt an der Transporteinrichtung befestigt sein. Das Werkzeug kann somit von der Steuerung immer an dem Befestigungspunkt des Werkstücks ausgerichtet werden. Die Transporteinrichtung zum Bewegen des Werkstücks kann dabei von einer Saugvorrichtung gebildet sein. Mittels der Saugvorrichtung lassen sich flächige Werkstücke auf einfache Weise befestigen und transportieren, ohne das Werkstück dabei zu beschädigen.

Weitere Vorteile ergeben sich anhand der Beschreibung eines in den Zeichnungen dargestellten Ausführungsbeispiels. Es zeigen:
Fig. 1 eine perspektivische Ansicht einer erfindungsgemäßen Vorrichtung zum Bearbeiten mineralischer Platten,
Fig. 2 eine schematische Draufsicht auf die erfindungsgemäße Vorrichtung in einer Anfangsposition der Bearbeitung,
Fig. 3 eine schematische Draufsicht auf die erfindungsgemäße Vorrichtung gemäß Fig. 2 in einer Mittelposition der Bearbeitung und
Fig. 4 eine schematische Draufsicht auf die erfindungsgemäße Vorrichtung gemäß Fig. 3 in einer Endposition der Bearbeitung.

Eine Vorrichtung zur Bearbeitung von Außenkonturen von Werkstücken insgesamt wird mit der Bezugsziffer 10 bezeichnet.

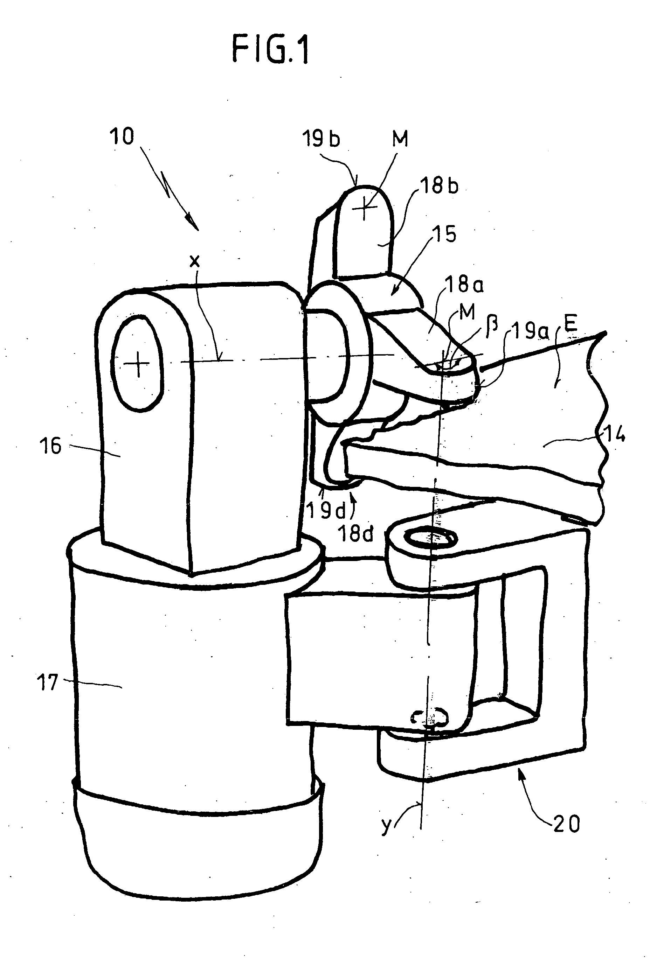

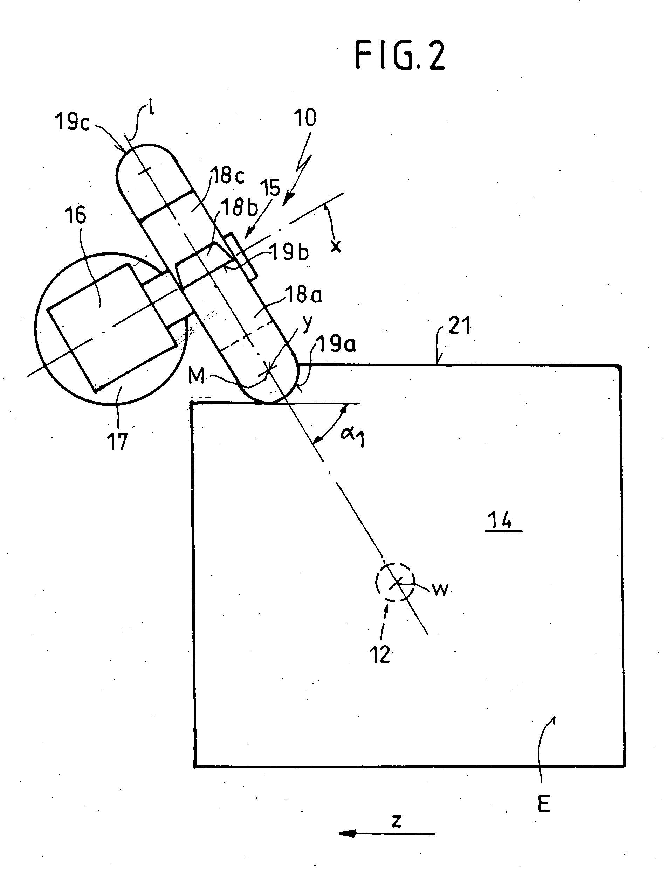

Eine solche Vorrichtung weist gemäß Fig. 1 im Wesentlichen ein Werkzeug 15, eine als Saugvorrichtung ausgebildete Transporteinrichtung 12 (siehe Fig. 2) sowie eine nicht dargestellte Programmsteuerung auf. Mittels der Transporteinrichtung 12 kann ein Werkstück 14 dem Werkzeug 15 zugeführt werden.

Das Werkzeug 15 ist gemäß Fig. 1 in einem Lagerkopf 16 um eine Rotationsachse x drehbar gelagert. Es weist radiale Fortsätze 18a bis 18d auf, welche an ihrem äußeren Ende mit radiusförmigen Arbeitsbereichen 19a bis 19d versehen sind. Der Lagerkopf 16 ist auf dem Gehäuse eines dem Werkzeug 15 als Antrieb dienenden Motors 17 befestigt. Die gesamte, das Werkzeug 15, den Lagerkopf 16 sowie den Motor 17 umfassende Einheit ist mittels einer gelenkigen Verbindung 20 um eine Achse y schwenkbar angeordnet.

Die Schwenkachse y ist in einem Mittelpunkt M des in einer Arbeitsposition befindlichen radiusförmigen Arbeitsbereichs 19a angeordnet und bildet einen rechten Winkel zur Bearbeitungsebene E. Auf diese Weise kann auch für Werkzeuge, die nicht allseitig tangential wirken ein Steuerungsprogramm eingesetzt werden, das beispielsweise bei üblichen Fräsmaschinen Verwendung findet. Aufgrund der Schwenkbarkeit um die Schwenkachse y kann die Bearbeitungsrichtung des Werkzeugs 15 immer optimal auf das Werkstück ausgerichtet werden. Für die Ausrichtung ergeben sich je nach Ausbildung des Werkstücks und Art des Werkzeugs unterschiedliche Möglichkeiten.

Das Werkzeug 15 kann beispielsweise gemäß Fig. 2 von der Programmsteuerung so ausgerichtet werden, dass eine in der Bearbeitungsebene E angeordnete, einen rechten Winkel zur Rotationsachse x bildende und durch den Mittelpunkt M des radiusförmigen Arbeitsbereichs 19a verlaufende Längsmittelachse I in etwa auch den Mittelpunkt w des Werkstücks 14 schneidet. Die Bearbeitungsrichtung des Werkzeugs 15 ist somit immer auf den Mittelpunkt w des Werkstücks 14 ausgerichtet.

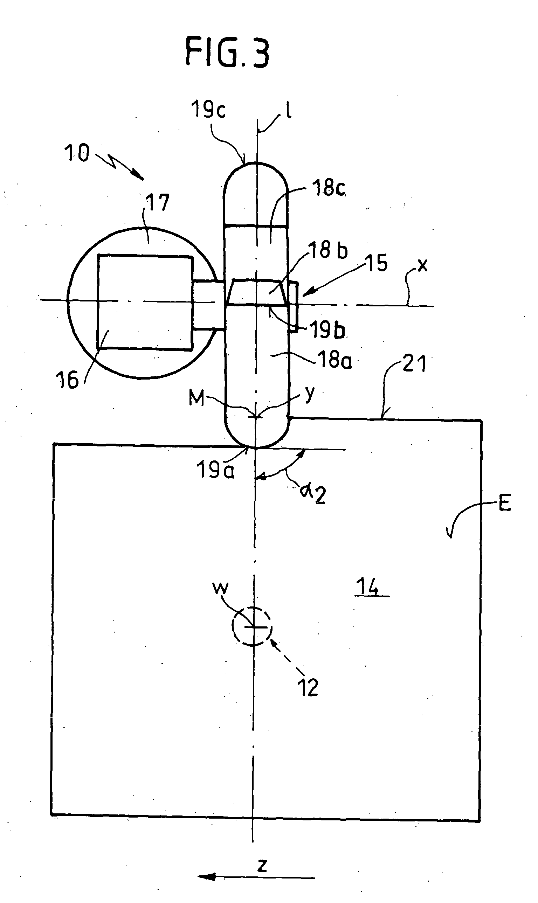

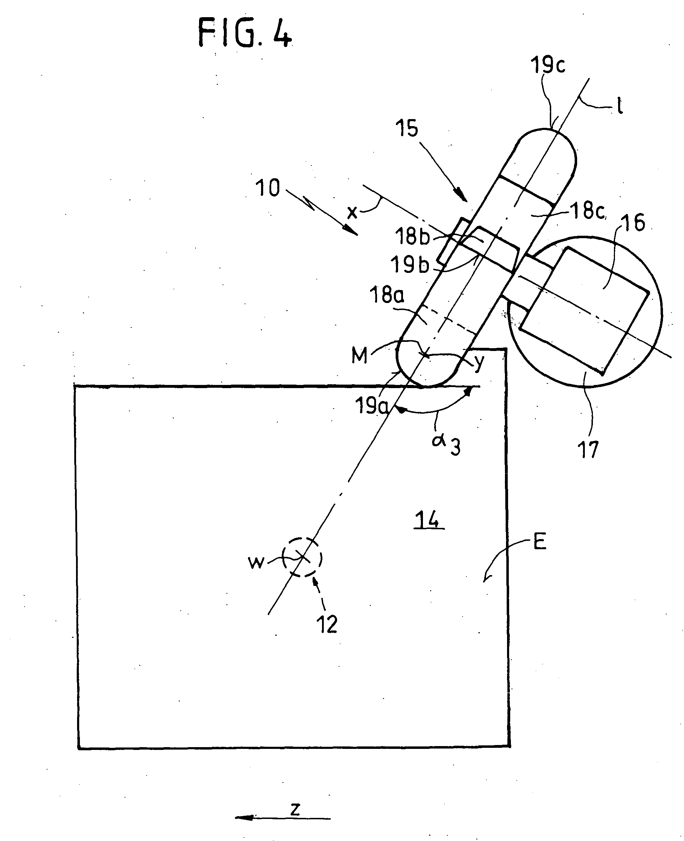

Auf diese Weise ergibt sich bei der Bearbeitung einer Außenkontur 21 des Werkstücks 14 in einer anfänglichen Bearbeitungsposition ein Winkel α₁ (siehe Fig. 2), in einer mittleren Bearbeitungsposition ein Winkel α₂ (siehe Fig. 3) und in einer Endposition der Bearbeitung ein Winkel α₃ (siehe Fig. 4) zwischen der Längsmittelachse I des Werkzeugs 15 und einer Vorschubrichtung z.

Der Nullpunkt eines von der Steuerung verwendeten nicht dargestellten Koordinatensystems kann dabei im Mittelpunkt M des Fortsatzes 18a angeordnet werden. Auf diese Weise lässt sich die Steuerung besonders einfach programmieren. Ist die Transporteinrichtung 12 gemäß der Fig. 2 bis 4 im Mittelpunkt w des Werkstücks 14 angeordnet, sind die Koordinaten der Transporteinrichtung 12 und des Mittelpunkts w identisch und können direkt zur Ausrichtung des Werkzeugs verwendet werden.

Gemäß einer weiteren Ausführungsform kann das Werkzeug aber auch so gesteuert werden, dass es immer in einem definierten Winkel zur Vorschubrichtung steht. In diesem Fall würde gemäß Fig. 2 die gesamte Außenkontur 21 des Werkstücks 14 mit einem Winkel α₁ zwischen der Längsmittelachse I und der Vorschubrichtung z bearbeitet. Bei einer Änderung der Vorschubrichtung würde das Werkzeug 15 derart ausgerichtet, dass es wiederum einen Winkel α₁ zur neuen Vorschubrichtung einnimmt.

In der in den Zeichnungen dargestellten Ausführungsform besitzen die Fortsätze 18a bis 18d radiusförmige Arbeitsbereiche 19a bis 19d, mit einem Winkel von β=180° (siehe Fig. 2). Darüber hinaus ist es aber auch möglich, dass sich die Fortsätze 18a bis 18d radial zur Rotationsachse x hin verjüngen, so dass der radiusförmige Arbeitsbereich 19 auch einen größeren Winkel β aufweisen kann. Die Verjüngung ist aber nur bis zu einem gewissen Winkel β möglich, da sonst eine ausreichende Bruchsicherheit der Fortsätze 18a bis 18d nicht gewährleistet ist.

## Patentansprüche

1. Verfahren zur Bearbeitung einer Außenkontur eines Werkstücks, bei dem das Werkstück mittels einer Transporteinrichtung einem rotierenden Werkzeug zugeführt und / oder ein bewegbares Werkzeug dem Werkstück zugeführt wird, wobei das Werkzeug mit einem radiusförmigen, einen Radiusmittelpunkt aufweisenden Arbeitsbereich versehen ist und wobei die Transporteinrichtung und /oder das bewegbare Werkzeug programmgesteuert werden, **dadurch gekennzeichnet, dass** das Werkzeug (15) in Abhängigkeit von der Bewegungsrichtung des Werkstücks (14) um eine Schwenkachse (y) gedreht wird, die bei einem in Bearbeitungsposition befindlichen, radiusförmigen Arbeitsbereich (19a) in dessen Mittelpunkt (M) senkrecht zur Bearbeitungsebene (E) angeordnet ist.

2. Verfahren nach Anspruch 1, **dadurch gekennzeichnet, dass** eine im rechten Winkel zu einer Rotationsachse (x) des Werkzeugs (15) angeordnete, die Schwenkachse (y) schneidende Werkzeugmittelachse (I) während der Bearbeitung des Werkstücks (14) ständig in etwa auf den Mittelpunkt (w) des Werkstücks (14) ausgerichtet ist.

3. Verfahren nach Anspruch 1, **dadurch gekennzeichnet, dass** eine im rechten Winkel zu einer Rotationsachse (x) des Werkzeugs (15) angeordnete, die Schwenkachse (y) schneidende Werkzeugmittelachse (I) während der Bearbeitung des Werkstücks (14) in einem definierten Winkel (α) zur jeweiligen Vorschubrichtung (z) angeordnet ist.

4. Verfahren nach Anspruch 2, **dadurch gekennzeichnet, dass** der Nullpunkt eines Koordinatensystems der Programmsteuerung im Schnittpunkt der Schwenkachse (y) und der Bearbeitungsebene (E) angeordnet ist.

5. Vorrichtung zur Bearbeitung von Außenkonturen von Werkstücken mit wenigstens einem rotierenden, einen radiusförmigen Arbeitsbereich aufweisenden Werkzeug, mit einer Antriebseinrichtung zur translatorischen und / oder rotatorischen Bewegung eines Werkstücks und / oder des Werkzeugs und mit einer Programmsteuerung, **dadurch gekennzeichnet, dass** wenigstens das Werkzeug (11) um eine Schwenkachse (y) drehbar ist, die im wesentlichen im Mittelpunkt (M) des in Bearbeitungsposition befindlichen, radiusförmigen Arbeitsbereichs (19a) des Werkzeugs (15) senkrecht zur Bearbeitungsebene (E) angeordnet ist.

6. Vorrichtung nach Anspruch 5, **dadurch gekennzeichnet, dass** das Werkzeug als ein mehrere radiale Fortsätze (18) aufweisendes Zurichtwerkzeug (15), insbesondere zum Bearbeiten mineralischer Platten (14) ausgebildet ist.

7. Vorrichtung nach Anspruch 5, **dadurch gekennzeichnet, dass** das Werkzeug als Kugelfräskopf ausgebildet ist.

8. Vorrichtung nach einem der Ansprüche 5 bis 7, **dadurch gekennzeichnet, dass** das angetriebene Werkstück (14) im wesentlichen im Werkstückmittelpunkt (w) an der Antriebseinrichtung (12) befestigt ist.

9. Vorrichtung nach einem der vorangehenden Ansprüche, **dadurch gekennzeichnet, dass** die Befestigung des Werkstücks (14) an der Antriebseinrichtung (12) von einer Saugvorrichtung gebildet ist.
